(19) **Europäisches Patentamt**

**European Patent Office**

**Office européen des brevets**

(11) **EP 0 934 624 B1**

(12) **EUROPÄISCHE PATENTSCHRIFT**

(45) Veröffentlichungstag und Bekanntmachung des Hinweises auf die Patenterteilung:
**02.01.2002 Patentblatt 2002/01**

(21) Anmeldenummer: **97913109.1**

(22) Anmeldetag: **16.10.1997**

(51) Int Cl.⁷: **H02P 8/12**, H02P 8/34

(86) Internationale Anmeldenummer:
**PCT/DE97/02391**

(87) Internationale Veröffentlichungsnummer:
**WO 98/18200 (30.04.1998 Gazette 1998/17)**

(54) **SCHRITTMOTORSTEUERUNG UND VERFAHREN ZUM BETREIBEN VON SCHRITTMOTOREN**

STEPPING MOTOR CONTROL, AND OPERATING MODE OF SUCH MOTORS

COMMANDE DE MOTEUR PAS A PAS, ET MODE DE FONCTIONNEMENT DE TELS MOTEURS

(84) Benannte Vertragsstaaten:
**DE FR GB**

(30) Priorität: **22.10.1996 DE 19643624**

(43) Veröffentlichungstag der Anmeldung:
**11.08.1999 Patentblatt 1999/32**

(73) Patentinhaber: **Océ Printing Systems GmbH**
**85586 Poing (DE)**

(72) Erfinder:
• **THIEMANN, Peter**
**D-80804 München (DE)**
• **UMLAUF, Jens**
**D-86415 Mering (DE)**
• **ANDRESEN, Hermann**
**D-84431 Weidenbach (DE)**

(74) Vertreter: **Schaumburg, Thoenes & Thurn**
**Postfach 86 07 48**
**81634 München (DE)**

(56) Entgegenhaltungen:
**EP-A- 0 414 436          US-A- 3 855 515**

**Beschreibung**

Die Erfindung bezieht sich auf den Einsatz von Schrittmotoren, insbesondere auf dem Gebiet der Drucktechnik und der Kopiertechnik. So werden z.B. in Hochleistungsdruckern eine Vielzahl von 2-Phasen-Schrittmotoren zum Transportieren eines Trägermaterials, das vorzugsweise Papier ist, von einer Papiereingabe zu einem Druckwerk, vorbei an einer Fixierstation bis zu einer Papierausgabe eingesetzt. Als Papier wird Endlospapier oder Einzelblattpapier eingesetzt.

Neben den Vorzügen wie hoher Schrittauflösung und hoher Positioniergenauigkeit besitzen Schrittmotoren aber auch Nachteile. So werden Schrittmotorsteuerungen meist für drei Betriebszustände angeboten. Im Stillstand werden die Wicklungen bzw. Phasen des Schrittmotors mit einem geringen Standstrom bestromt. Beim Beschleunigen des Schrittmotors in einer Beschleunigungsphase wird ein Strom mit einer sehr großen Stromamplitude eingesetzt. Hat der Schrittmotor seine Betriebsdrehzahl erreicht, so kann in einen Laufbetriebszustand umgeschaltet werden, in dem die Stromamplitude der Wicklungsströme zwischen der im Stillstand und in der Beschleunigungsphase liegt. Eine Anpassung des Betriebsverhaltens an ein zeitlich veränderliches Lastmoment kann nur grob, d.h. über die genannten drei Betriebszustände erreicht werden. Um ein sogenanntes Außertrittfallen des Schrittmotors zu verhindern, wird sowohl in der Beschleunigungsphase als auch im Laufzustand ein Minimalwert der Drehmomentreserve nicht unterschritten, der sichert, daß die Differenz aus Antriebsmoment und Lastmoment einen vorgegebenen Wert nicht unterschreitet. Dabei muß das größte auftretende Lastmoment berücksichtigt werden, das jedoch beim Betrieb des Schrittmotors nur zeitweise auftritt, so daß die momentane Drehmomentreserve in der Regel höher als der vorgegebene Minimalwert ist. Dem Schrittmotor wird demzufolge zuviel Energie zugeführt. Diese Energie setzt sich um in störende Schwankungen der Drehzahl, Wärme, Laufgeräusche und andere uherwünschte Nebenwirkungen.

Eine bekannte Möglichkeit zum Verhindern dieser Nachteile besteht darin, daß mit Hilfe einer Regelung beim Betrieb des Schrittmotors die Amplituden der Phasenströme so verändert werden, daß die Drehmomentreserve jeweils genau den vorgegebenen minimalen Wert hat. Dazu wird das Lastmoment beim Betrieb des Schrittmotors, d.h. in Echtzeit, ermittelt, in dem z.B. die Istposition des Rotors des Schrittmotors ständig mit Hilfe einer optischen Sensoreinheit erfaßt wird. Als Stellgröße wird die Amplitude der Phasenströme und/oder der Lastwinkel verwendet. Nachteilig ist der Aufwand für den Aufbau eines kompletten Regelkreises mit Sensoren, Vergleichseinrichtung und Stelleinheit. Die Anforderungen an die Sensoren und den Regler sind gewöhnlich sehr hoch, da die Schrittmotoren bei hoher Laufleistung eine große Positioniergenauigkeit haben sollen. Als Stromregelung wird z.B. eine relativ aufwendige Vierquadrantenregelung verwendet, um sowohl für Stromauf- wie auch für Stromabbau ein symmetrisches Verhalten zu erzeugen.

Die Erfindung betrifft in einem ersten Aspekt ein Verfahren zum Betreiben eines Schrittmotors, bei dem sich das Lastmoment bei im wesentlichen gleicher Drehzahl zeitlich ändert. Eine derartige Situation tritt z. B. in dem genannten Hochleistungsdrucker auf, wenn eine Papierkante zwischen zwei mit einem sehr hohen Druck aneinandergepreßten Fixierwalzen zu Beginn des Fixiervorgangs hindurchgezogen wird. Dabei kommt es zu einem sprunghaften Anstieg und anschließendem sprunghaften Abfall des Lastmoments. Bei bekannten Hochleistungsdruckern kommt es durch den sprunghaften Verlauf des Lastmoments zu einer kurzzeitigen Verringerung der Drehzahl der Fixierwalzen, die zu einem diskontinuierlichen Papierlauf führt. Bei diskontinuierlichem Papierlauf wird das Papier im Vergleich zu einem gleichmäßigen Papierlauf stärker beansprucht. Im Extremfall kommt es zu Rissen im zu bedruckenden Papier. Außerdem kommt es bei ungleichmäßigem Papierlauf zu Verschiebungen des Papiers gegenüber Sollpositionen. Derartige Verschiebungen können schon im Bereich von einigen hundertsteln Millimetern zu einer sichtbar schlechteren Druckqualität führen.

Aus dem Dokument US 3,855,515 ist es bekannt, den zeitlichen Verlauf des Lastmomentes in einem Einmeßvorgang zu ermitteln und abhängig vom Verlauf des Lastmomentes die Amplitudenwerte für die Wicklungsströme eines Schrittmotors zu bestimmen. Dem Motor werden im Betrieb ab einem Startzeitpunkt Wicklungsströme so zugeführt, daß der Motor nicht mehr Leistung aufnimmt, als er zum Antreiben der Last benötigt. Auf diese Weise wird die Verlustleistung des Motors und der Steuerung verringert.

Aus der DE 42 20 201 A1 ist eine Transporteinrichtung mit mindestens einer Fixierwalze bekannt, die von einem Schrittmotor angetrieben wird. Eine Detektoreinrichtung erfaßt die Transportgeschwindigkeit des transportierten Blattes, wobei mit Hilfe der Detektorsignale diese Transportgeschwindigkeit konstant gehalten wird.

Aufgabe des ersten Aspekts der Erfindung ist es, ein einfaches Verfahren zum Betreiben eines Schrittmotors bei etwa konstanter Drehzahl und zeitlich verändertem Lastmoment anzugeben, wobei der Schrittmotor insbesondere in einem elektrofotografischen Einzelblattdrucker zum Antrieb einer Fixierwalze eingesetzt wird.

Diese Aufgabe wird durch ein Verfahren mit den Merkmalen des Patentanspruchs 1 gelöst. Der erste Aspekt der Erfindung geht von der Überlegung aus, daß der Verlauf des Lastmoments qualitativ unverändert zu bestimmten Zeitpunkten wiederkehrt, wenn der Schrittmotor für die gleiche Aufgabe über eine längere Zeitspanne eingesetzt wird. Deshalb wird bei der Erfindung der zeitliche Verlauf des Lastmoments in einem Einmeßvorgang ermittelt. Zum Einmessen können die bekannten Verfahren zur Ermittlung eines Lastmoments verwendet werden.

Beim ersten Aspekt der Erfindung wird aus dem Verlauf des Lastmoments ein Verlauf von Amplitudenwerten für die Wicklungsströme des Schrittmotors so ermittelt, daß bei sich änderndem Lastmoment die Amplitudenwerte gleichsinnig geändert werden. Das bedeutet, daß bei steigendem Lastmoment die Amplitude größer und bei fallendem Lastmoment die Amplitudenwerte kleiner werden.

Beim ersten Aspekt der Erfindung werden nach Beenden des Einmessvorgangs und nach dem Bestimmen der Amplitudenwerte die Wicklungsströme beginnend zu einem Startzeitpunkt gemäß den ermittelten Amplitudenverlauf verändert. Der Startzeitpunkt stimmt mit den erwähnten Zeitpunkten überein, an denen der Verlauf des Lastmoments wiederkehrt, so daß Lastmomentverlauf und Amplitudenwertverlauf zueinander synchron sind. Der Amplitudenwertverlauf wird dem bekannten Stromverlauf für ein Betreiben des Schrittmotors im Voll-, Halb- oder Mikroschrittbetrieb überlagert. Somit findet beim ersten Aspekt der Erfindung letztlich eine Stromamplitudenmodulation der Wicklungsströme mit einer dem Verlauf des Lastmoments ähnlichen Modulationsgröße statt. Die Periodendauer der Wicklungsströme bleibt beim ersten Aspekt der Erfindung konstant, da die Drehzahl des Schrittmotors zeitlich möglichst konstant sein soll. Durch den ersten Aspekt der Erfindung wird erreicht, daß sich durch die veränderten Amplitudenwerte auch das Antriebsmoment des Schrittmotors verändert, so daß es zu keiner Veränderung der Drehzahl aufgrund eines zunehmenden Lastmoments kommt. Auch der mittlere elektrische Lastwinkel bleibt durch den ersten Aspekt der Erfindung konstant bei etwa 90°. Antriebsmoment und Lastmoment sind beim zweiten Aspekt der Erfindung somit aufeinander abgestimmt. Damit wird dem Schrittmotor genau die Energie zugeführt, die er benötigt. Eine aufwendige Regelung kann beim ersten Aspekt der Erfindung entfallen. Das Verfahren nach dem ersten Aspekt der Erfindung ist einfach, da die meisten Verfahrensschritte nur ein einziges Mal ausgeführt werden, z.B. der Einmeßvorgang.

In einem Ausführungsbeispiel des ersten Aspekts der Erfindung treibt der Schrittmotor mindestens eine Fixierwalze zum Fixieren des Tonerbildes auf mindestens einem Einzelblatt in einem elektrofotografischen Einzelblattdrucker an, wobei der Startzeitpunkt etwa durch den Fixierbeginn des Tonerbildes bestimmt wird. Jedes Einzelblatt hat eine in Transportrichtung gesehen vordere Kante, die in der Regel zwischen zwei Fixierwalzen eingezogen wird. Bei gleichem Papier und gleicher Papierdicke ergibt sich bei jedem Einzug im wesentlichen der gleiche Lastmomentverlauf, so daß dieser Verlauf nur einmal im Einmeßvorgang ermittelt werden muß. So ergibt sich z.B. für jede Papierdicke ein gesonderter Lastmomentverlauf Der Startzeitpunkt zur Veränderung der Amplitudenwerte gemäß dem veränderten Lastmomentverlauf liegt entweder unmittelbar vor dem Fixierbeginn des Tonerbildes oder eine bestimmte Verzögerungszeit vor dem Fixierbeginn. Durch das Ausführungsbeispiel wird erreicht, daß eine plötzliche Drehzahlverringerung und anschließende plötzliche Drehzahlerhöhung aufgrund eines Lastmomentsprungs beim Einziehen des Papiers vermieden wird. Das Papier wird demzufolge mit gleichmäßiger Geschwindigkeit durch die Fixierwalze fixiert, so daß übermäßige Belastungen des Papiers ausgeschlossen sind.

In einem weiteren Ausführungsbeispiel des ersten Aspekts der Erfindung ist die Fixierwalze in einem Abstand von einer Umdruckstation zum Aufbringen des Tonerbildes angeordnet, der innerhalb der Blattlänge des Einzelblattes in Transportrichtung liegt. In diesem Fall kann die Fixierwalze in kompakter Bauweise in einem geringen Abstand hinter der Umdruckstation angebracht werden, so daß ein durch die Umdruckstation aufgebrachtes verwischbares Tonerbild schon nach kurzem Transportweg fixiert wird und ein Verwischen von Tonerteilchen durch den Transport ausgeschlossen ist. Durch dieses Ausführungsbeispiel der Erfindung wird weiterhin erreicht, daß eine Rückwirkung des Fixiervorganges auf den Umdruckvorgang ausgeschlossen ist, da bei dem Ausführungsbeispiel der Erfindung das Blatt mit gleichmäßiger Geschwindigkeit fixiert wird. Wäre dies nicht der Fall, so käme es zu Rückwirkungen auf den Umdruckvorgang, in deren Folge das Tonerbild bereits beim Auftragen verwischt wird. Dies trifft um so mehr zu, je dicker das zu bedruckende Trägermaterial ist.

Die Erfindung betrifft in einem zweiten Aspekt eine Schrittmotorsteuerung mit den Merkmalen des Patentanspruchs 7 zum Durchführen des Verfahrens nach dem ersten Aspekt der Erfindung bzw. des Verfahrens nach einem der Ausführungsbeispiele des ersten Aspekts der Erfindung. Somit übertragen sich die oben genannten technischen Wirkungen auch auf diese Schrittmotorsteuerung.

Die Erfindung betrifft in einem dritten Aspekt ein Verfahren zum Betreiben eines Schrittmotors bei zeitlich veränderlicher Drehzahl, d.h. beim Beschleunigen bzw. Verzögern gemäß einer vorgegebenen Drehzahlrampe. Das Lastmoment kann sowohl einen konstanten Wert beim Verändern der Drehzahl als auch einen veränderlichen Wert haben. Bezüglich der Drehmomentreserve gilt das oben Gesagte, so daß auch bei veränderlicher Drehzahl eine zu große Drehmomentreserve zu den genannten negativen Wirkungen führt. Die Antriebsmomentkennlinie eines Schrittmotors hat üblicherweise einen zu größeren Drehzahlen hin stark abfallenden Verlauf.

Bei niedrigen Drehzahlen wird der Schrittmotor im sogenannten Start-Stop-Betrieb angesteuert, in welchem der Schrittmotor fehlerfrei mit der vorgegebenen Drehzahl startet und stoppt. Die Drehzahl der Rampe hat in diesem Falle einen sprungförmigen Verlauf.

In einem mittleren Drehzahlbereich, in dem das Antriebsmoment des Schrittmotors nur unwesentlich abfällt, werden üblicherweise lineare Drehzahlrampen verwendet, d.h. die Drehzahl steigt bzw. fällt linear über die Zeit. Selbst bei konstantem Lastmoment variiert in diesem Fall die Drehmomentreserve jedoch beträchtlich aufgrund des Abfallens der Antriebsmomentkennlinie hin zu höheren Drehzahlen. Insbesondere ist die Drehmomentreserve bei gleichbleibender Amplitude der Phasenströme bei niedrigen Drehzahlen der Rampe größer als bei höheren Drehzahlen. Somit wird dem Schrittmotor regelmäßig bei ansteigender Rampe zu Beginn der Rampe ein Zuviel an Energie zugeführt, das zu den oben genannten Nebenwirkungen führt.

Soll bis in einen hohen Drehzahlbereich beschleunigt werden, so werden Rampen mit exponentiellen Verlauf verwendet, bei denen in einer an den Verlauf der Antriebsmomentkennlinie angepaßten Art und Weise die Beschleunigung bei hohen Drehzahlen geringer ist als bei mittleren und niedrigeren Drehzahlen. Diese Rampenformen verlangen aber einen erhöhten schaltungstechnischen und softwaretechnischen Aufwand.

Die genannten Lösungen versagen jedoch alle, wenn die Rampenform durch das System vorgegeben wird, also bei Anwendungen, in denen typischerweise Schrittmotoren eingesetzt werden. Zusätzlich sind die Schrittmotoren oft auf extern vorgegebene Taktsignale zu synchronisieren oder müssen ideal synchron zu anderen Antrieben beschleunigt werden, so daß deren Rampenform übernommen werden muß. Insbesondere in der Drucktechnik werden Rampen ohne Beschleunigungssprung, d.h. zum Beispiel mit einem Verlauf ähnlich einer Tangens-Hyperbolicus-Funktion gefordert, um z.B. empfindliche Papierbahnen nicht übermäßig zu belasten.

Aufgabe des dritten Aspekts der Erfindung ist es, ein einfaches Verfahren zum Betreiben eines Schrittmotors anzugeben, bei dem die dem Schrittmotor zugeführte Energie bei veränderlicher Drehzahl im wesentlichen an das Lastmoment angepaßt ist.

Diese Aufgabe wird durch ein Verfahren mit den Merkmalen des Patentanspruchs 8 gelöst. Beim dritten Aspekt der Erfindung wird wiederum von der Überlegung ausgegangen, daß sich bei den hier betrachteten Schrittmotoren das Lastmoment beim mehrmaligen gleichartigen Verändern der Drehzahl in immer wieder kehrender gleichartiger Weise verändert. Deshalb wird beim dritten Aspekt der Erfindung die Lastmomentkennlinie über der Drehzahl in einem Einmeßvorgang ermittelt. Je nach Systemanforderungen kann der Einmeßvorgang nur im Zurückgreifen auf einen irgendwann einmal ermittelten Richtwert für das Lastmoment bestehen oder durch eine Vielzahl von Lastmomentmessungen bei verschiedenen Drehzahlen am durch den Schrittmotor getriebenen System ermittelt werden. Als Einmeßvorgang wird auch eine Berechnung oder Simulation der Lastmomentkennlinie aufgefaßt, wobei das Ergebnis der Berechnungen dann beim Betrieb des Schrittmotors überprüft wird.

Beim dritten Aspekt der Erfindung werden Antriebsmomentkennlinien des Schrittmotors über der Drehzahl für eine Vielzahl von Stromamplituden bestimmt. Das Bestimmen der Antriebsmomentkennlinien kann durch Messen der Antriebsmomente des Schrittmotors für verschiedene Stromamplituden jeweils über den gesamten Drehzahlbereich erfolgen. Ein anderer Weg besteht darin, eine Formel bereitzustellen, die für verschiedene Stromamplituden das Antriebsmoment abhängig von der Drehzahl angibt, bzw. mehrere Formeln bereitzustellen, die jeweils für einen bestimmten Stromamplitudenbereich gelten.

Außerdem muß beim dritten Aspekt der Erfindung der Verlauf der Drehzahl des Schrittmotors gemäß der Rampenfunktion vorgegeben werden. Die Rampenfunktion kann eine der genannten drei Typen sein oder einen anderen Verlauf haben, der durch das jeweilige System erzwungen wird, bzw. der bei dem jeweiligen System zweckmäßig ist.

Abhängig von den jeweiligen Drehzahlen des vorgegebenen Drehzahlverlaufs wird jeweils aus den Antriebsmomentkennlinien die Antriebsmomentkennlinie ausgewählt, bei der die Drehmomentreserve aus Antriebsmoment abzüglich Lastmoment innerhalb eines vorbestimmten Bereichs liegt. Dieser Bereich ist nach oben durch eine Vorgabe für die maximal gewünschte Drehmomentreserve gegeben. Nach unten findet eine Begrenzung zum einen durch das jeweils geforderte Lastmoment und zum anderen durch eine kleine Drehmomentreserve bzgl. des Lastmoments statt. Die ausgewählte Antriebsmomentkennlinie ist eindeutig einer bestimmten Stromamplitude zugeordnet, die dann dem betrachteten Drehzahlwert als ausgewählte Stromamplitude zugeordnet wird. Der Bereich kann auch auf eine Soll-Antriebsmomentkennlinie beschränkt sein.

Nach dem Ermitteln der Lastmomentkennlinie und vorzugsweise nach dem Ermitteln der ausgewählten Stromamplituden wird der Schrittmotor beim dritten Aspekt der Erfindung beginnend zu einem Startzeitpunkt gemäß dem vorgegebenen Drehzahlverlauf mit Stromimpulsen der ausgewählten Stromamplitude angesteuert, wobei sich die Periodendauer der Wicklungsströme gemäß dem vorgegebenen Drehzahlverlauf ändert. Da die Drehmomentreserve den vorbestimmten Grenzwert nicht überschreitet, wird dem Schrittmotor im wesentlichen nur soviel Energie zugeführt, wie er zum ordnungsgemäßen Betrieb braucht. Ein übermäßiges Erwärmen, laute Laufgeräusche oder ein Schwingen des Motors wird verhindert. Das Verfahren nach dem dritten Aspekt der Erfindung ist einfach, da die meisten Verfahrensschritte nur einmal durchgeführt werden müssen, z.B. Ermitteln der Lastmomentkennlinie, Ermitteln der Antriebsmomentkennlinie, Auswählen der Stromamplituden.

In einem Ausführungsbeispiel des dritten Aspekts der Erfindung treibt der Schrittmotor einen Teil des Transportsystems zum Transport von blattförmigem Trägermaterial in einem elektrofotografischen Hochleistungsdrucker an. Da in der Regel eine Vielzahl von Schrittmotoren zum Antrieb des Transportsystems verwendet werden, muß insbesondere bei Endlospapier ein Gleichlauf zwischen den Schrittmotoren sichergestellt werden und zum anderen vervielfachen sich die genannten positiven Wirkungen durch die Erfindung beim Betreiben mehrerer Schrittmotoren. Insbesondere beim Transport von blattförmigen Trägermaterial werden erhöhte Anforderungen an die Ansteuerung der Schrittmotoren gestellt, da eine hohe Belastung des empfindlichen Trägermaterials beim Transport vermieden werden muß.

Beim Verfahren nach dem dritten Aspekt der Erfindung überlagern letztlich die bestimmten Stromamplitudenwerte die Stromamplitude im Vollschritt-, Halbschritt- oder Mikroschrittbetrieb ohne Stromamplitudenveränderung, so daß eine Strommodulation durchgeführt wird.

Die Erfindung betrifft in einem vierten Aspekt eine Schrittmotorsteuerung mit den Merkmalen des Patentanspruchs 11 zum Durchführen des Verfahrens bzw. von Ausführungsbeispielen des Verfahrens nach dem dritten Aspekt der Erfindung. Somit übertragen sich die dort genannten technischen Wirkungen auch auf die Schrittmotorsteuerung.

Im folgenden wird die Erfindung anhand der Zeichnungen erläutert. Darin zeigen

Figur 1    die Berechnung der Stromamplituden der Phasenströme für einen Schrittmotor zum Antrieb der Fixierwalzen eines elektrofotografischen Druckers, und

Figur 2    die Bestimmung der Stromamplituden der Phasenströme für einen Schrittmotor beim Verändern der Drehzahl gemäß einer Drehzahlrampe.

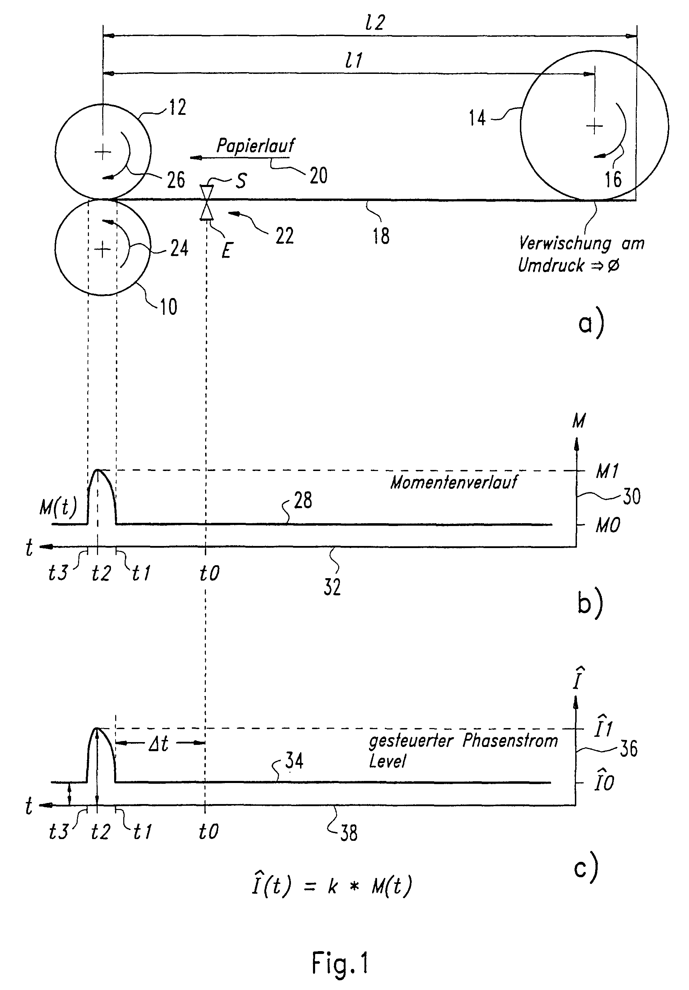

Anhand der Fig. 1 wird im folgenden die Bestimmung der Stromamplituden der Phasenströme für einen Schrittmotor zum Antrieb von Fixierwalzen 10, 12 eines elektrofotografischen Druckers erläutert. Teil a der Fig. 1 zeigt eine Fotoleitertrommel 14 des elektrofotografischen Druckers, die sich in Richtung eines Pfeiles 16 dreht. Ein Papierblatt 18 wird an der Fotoleitertrommel 14 in der durch einen Pfeil 20 angedeuteten Transportrichtung vorbeitransportiert. Beim Vorbeitransport des Papierblatts 18 an der Fotoleitertrommel 14 wird mit Hilfe einer nicht dargestellten Korona-Einrichtung ein Tonerbild von der Fotoleitertrommel 14 auf das Papierblatt 18 übertragen.

Das Papierblatt 18 wird in Transportrichtung 20 zu den Fixierwalzen 10 bis 12 hin transportiert, wobei das Papierblatt 18 an einer Sensoreinheit 22 aus einer Lichtquelle S und einem lichtempfindlichen Element E vorbeitransportiert wird. Die Sensoreinheit 22 erzeugt ein Sensorsignal, sobald die in Transportrichtung 20 gesehene vordere Papierkante des Papierblatts 18 den Lichtstrahl der Lichtquelle S auf das lichtempfindliche Element E unterbricht. Die Papierkante gelangt anschließend zwischen die Fixierwalzen 10 und 12, welche sich gegensinnig in Richtung von Pfeilen 24 und 26 mit konstanter Winkelgeschwindigkeit w drehen, so daß das Papierblatt 18 zwischen die beiden Fixierwalzen 10 und 12 gezogen wird, sobald die vordere Papierkante von den Fixierwalzen 10 und 12 erfaßt wird. Die Fixierwalze 12 ist beheizt und hat auf ihrer Oberfläche eine Temperatur von ca. 220° C. Zusätzlich sind die beiden Fixierwalzen 10 und 12 mit einem hohen Druck gegeneinander gepreßt. Dadurch wird das Tonerbild auf dem Papierblatt 18 beim Fixiervorgang unter hohem Druck bei der Fixiertemperatur in das Papierblatt 18 eingeschmolzen und damit fixiert.

Die Fixierwalzen 10 und 12 sind in einem Abstand 11 von der Fotoleitertrommel 14 entfernt angeordnet. Der Abstand 11 ist kürzer als die Länge 12 des Papierblatts 18 in Transportrichtung 20. Durch diese Anordnung von Fixierwalzen 10 und 12 sowie Fotoleitertrommel 14 ergibt sich ein kompakter Aufbau des Druckers.

Teil b der Fig. 1 zeigt einen Verlauf 28 des Lastmoments M über der Zeit t. Dabei ist das Lastmoment M auf der Ordinatenachse 30 und die Zeit t auf der Abszissenachse 32 dargestellt. Zu einem Zeitpunkt t0 wird das Papierblatt 18 an der Sensoreinheit 22 vorbeitransportiert. Zu einem Zeitpunkt t1, der zeitlich nach dem Zeitpunkt t0 liegt, erreicht die vordere Papierkante die beiden Fixierwalzen 10 und 12. Zum Einziehen des Papierblatts 18 zwischen die beiden Fixierwalzen 10 und 12 ist ein erhöhtes Drehmoment notwendig. Dieses Drehmoment ist größer als ein Drehmoment M0, welches erforderlich ist, um die beiden Fixierwalzen 10 und 12 trotz des hohen gegenseitigen Andrucks ohne dazwischen liegendes Papierblatt 18 gegensinnig zu drehen. Da die Oberflächen der beiden Fixierwalzen 10 und 12 aus einem elastischen Material bestehen, muß beim Eindringen der Papierkante des Papierblatts 18 zwischen die beiden Fixierwalzen 10 und 12 eine Verformungsarbeit geleistet werden, die zu dem erhöhten Lastmoment führt. Zu einem Zeitpunkt t2 erreicht das Lastmoment M einen Maximalwert M1. Das Drehmoment M sinkt nach dem Einziehen der Kante wieder relativ schnell etwa auf den Anfangswert M0 zu einem Zeitpunkt t3, der nach dem Zeitpunkt t2 liegt. Somit hat das Lastmoment M beim Erfassen der Papierkante des Papierblatts 18 von den beiden Fixierwalzen 10 und 12 einen etwa sprungartigen Anstieg bis zum Zeitpunkt t2 und danach einen sprungartigen Abfall bis zum Zeitpunkt t3.

Teil c der Fig. 1 zeigt den aus dem Lastmomentenverlauf im Teil b der Fig. 1 ermittelten Amplitudenverlauf 34 für die Phasenströme in den Wicklungen des Schrittmotors. Dabei ist auf der Ordinatenachse 36 die Stromamplitude Î und auf der Abszissenachse 38 die bereits erwähnte Zeit t dargestellt. Die Stromamplitude Î(t) der Phasenströme berechnet sich aus dem im Teil b der Fig. 1 angegebenen Lastmomentenverlauf M(t) nach folgender Formel:

$$\hat{I}(t) = k * M(t) \qquad (1),$$

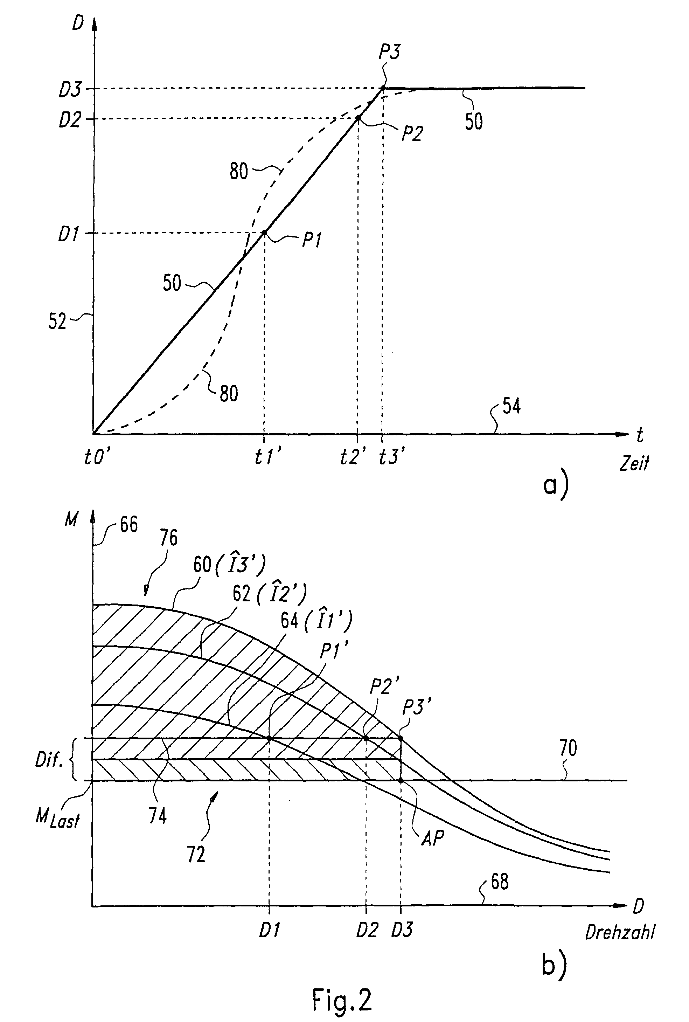

wobei k ein fest vorgegebener Proportionalitätsfaktor ist. Damit ergibt sich zu den Zeitpunkten t0 und t1 eine Stromamplitude Î0. Zum Zeitpunkt t2, d.h. beim Auftreten des maximalen Lastmoments M1 hat auch die Stromamplitude Î ihren maximalen Wert Î1. Zum Zeitpunkt t3 ist die Stromamplitude Î wieder auf den Wert Î0 abgefallen. Ist die Stromamplitude Î1 zum Beispiel dreimal so groß wie die Stromamplitude Î0, so wird der Stromamplitudenwert für einen Schritt des Schrittmotors zum Zeitpunkt t2 dreimal höher liegen, als der Stromamplitudenwert für einen Schritt zum Zeitpunkt t1 oder t3. Ändert sich die Stromamplitude Î innerhalb der Periode der Phasenströme mehrmals, so wird der jeweilige Amplitudenwert Î eventuell gar nicht erreicht, bevor ein anderer Amplitudenwert Î wirksam geschaltet wird. Im Extremfall ändert sich der Amplitudenwert Î bei jedem Schritt, so daß die Amplitudenwerte Î zu Momentanwerten entarten, wie es auch beim Vollschrittbetrieb der Fall ist. Letzlich kommt es also zu einer Stromamplitudenmodulation der Phasenströme, bei der der Momentenverlauf 28 (vgl. Teil b Fig. 2) auf den Phasenstromverlauf bei einer vorgegebenen konstanten Drehzahl des Schrittmotors und Phasenströmen mit dem Amplitudenwert Î0 aufmoduliert wird. Die Frequenz der Wicklungströme ist konstant und an die Winkelgeschwindigkeit w der Fixierwalzen 10 und 12 angepaßt, wobei gegebenenfalls ein Getriebe zwischen Schrittmotor und Fixierwalzen verwendet wird. Trotz des veränderten Lastmoments M bleibt die Winkelgeschwindigkeit w im ersten Ausführungsbeispiel konstant. Der mittlere elektrische Lastwinkel liegt Lastmoment unabhängig bei 90°.

Da die Stromamplituden Î nur zu Zeitpunkten verändert werden, in denen ein neuer Schritt des Schrittmotors beginnt, müssen die Stromamplitudenwerte auch nur zu diesen diskreten Zeitpunkten bestimmt werden. Demzufolge reicht es auch aus, den Momentenverlauf 28 nur zu diskreten Zeitpunkten tn zu bestimmen.

Wurden die Stromamplituden Î zu den Zeitpunkten tn ermittelt, so werden sie in einer Speichereinheit gespeichert. Beim Betrieb des Druckers wird zum Zeitpunkt t0 das Sensorsignal von der Sensoreinheit 22 erzeugt. Daraufhin werden nach einer Verzögerung Δt die gespeicherten Stromamplitudenwerte În an die Stromregelung des Schrittmotors übermittelt, welche einen Strom mit der vorgegebenen Stromamplitude erzeugt. Leistungstreiber speisen den Wicklungsstrom gegebenenfalls in die Wicklungen des Schrittmotors. Die Verzögerung Δt ermöglicht es, den Sensor in Transportrichtung 20 gesehen etwas vor den Fixierwalzen 10 und 12 anzubringen, wo mehr Bauraum vorhanden ist.

Alternativ zur Speichereinheit kann auch eine Ausgabeeinheit verwendet werden, die eine Funktion zum Approximieren des Lastmoments und zugehörige Funktionsparameter speichert. Die Stromamplitudenwerte Î werden dann in Echtzeit beim Betrieb des Schrittmotors mit Hilfe der Approximationsfunktion berechnet.

Fig. 2 zeigt in einem zweiten Ausführungsbeispiel die Bestimmung der Stromamplituden der Phasenströme für einen Schrittmotor beim Verändern der Drehzahl gemäß einer Rampe.

Im Teil a der Figur 2 ist die Rampe 50 dargestellt, wobei auf der Ordinatenachse die Drehzahl D und auf der Abszissenachse die Zeit t abgetragen ist. Ausgehend von einem Zeitpunkt t0' mit einer Drehzahl D von null Umdrehungen pro Minute wird die Drehzahl bis zu einem Zeitpunkt t3' linear bis auf die Drehzahl D3 erhöht. Anschließend bleibt die Drehzahl für eine vorgegebene Zeit nach dem Zeitpunkt t3' auf dem Drehzahlwert D3, so daß der Schrittmotor mit gleichbleibender Drehzahl läuft. Aus der Rampe 50 können zu verschiedenen Zeitpunkten die Solldrehzahlen D abgelesen werden, indem z.B. für den Zeitpunkt t1' in vertikaler Richtung der Schnittpunkt P1 mit der Rampe ermittelt wird. Anschließend wird der zum Schnittpunkt P1 gehörende Drehzahlwert ermittelt, indem eine vertikale Linie vom Schnittpunkt P1 bis zur Drehzahlachse bzw. der Ordinatenachse 52 verlängert wird, so daß sich der Drehzahlwert D1 ergibt. Auf die selbe Weise wird die Drehzahl für einen Zeitpunkt t2' unter Verwenden des Schnittpunktes P2 zu D2 ermittelt. Die bereits erwähnte Drehzahl D3 ergibt sich zum Zeitpunkt t3' mit Hilfe eines Schnittpunktes P3. Vom Zeitpunkt t0' bis zum Zeitpunkt t3' wird der Schrittmotor mit einem konstanten Wert beschleunigt.

Im Teil b der Figur 2 sind von einer Vielzahl von Antriebsmomentkennlinien des Schrittmotors über der Drehzahl drei Kennlinien 60, 62 und 64 dargestellt. Auf der Ordinatenachse 66 ist das Lastmoment M und auf der Abszissenachse 68 ist die Drehzahl D dargestellt. Die Antriebsmomentkennlinie 64 gilt für eine Stromamplitude Î1', die Antriebsmomentkennlinie 62 für eine Stromamplitude Î2', wobei der Stromamplitudenwert Î2' größer ist als der Stromamplitudenwert Î1', und die Antriebsmomentkennlinie 60 gilt für eine Stromamplitude Î3', deren Wert oberhalb des Stromamplitudenwertes Î2' liegt.

Außerdem ist im Teil b der Figur 2 der Verlauf 70 des Lastmoments MLast eingezeichnet. Zur vereinfachten Darstellung ist das Lastmoment MLast konstant über die Drehzahl D. Bei anderen Lastmomentverläufen wird das beschriebene Verfahren in analoger Weise angewendet. Durch einen schraffierten Bereich 72 wird das Drehmoment gekennzeichnet, welches zusätzlich zum Lastdrehmoment MLast für die Beschleunigung aufgewendet werden muß. Um einen sicheren Betrieb des Schrittmotors zu gewährleisten, wird weiterhin ein Sicherheitsmoment zusätzlich zum Lastmoment MLast und zum Moment für die Beschleunigung berücksichtigt, so daß sich ein Soll-Antriebsmomentverlauf 74 ergibt, der über der Drehzahl D konstant ist.

Würde der Schrittmotor z.B. mit der Stromamplitude Î3' gemäß der Rampe 50 (vgl. Teil a der Fig. 2) beschleunigt, so wird die Drehmomentreserve mit zunehmenden Drehzahlen D kleiner. Dieser Sachverhalt wird durch einen zweiten schraffierten Bereich 76 verdeutlicht. Die Drehmomentreserve 76 ist bei unteren Drehzahlen sehr hoch, so daß dem Schrittmotor zu viel Energie zugeführt wird, die zu den bekannten negativen Wirkungen, wie Schwingungsneigung des Schrittmotors, Erwärmung oder lautes Laufgeräusch führt. Um diese Wirkungen zu verhindern, werden für verschiedene Drehzahlen D unterschiedliche Stromamplituden Î bestimmt.

Für die Drehzahl D1 wird dabei eine vertikale Linie bis zu einem Schnittpunkt P1' mit dem Drehmomentverlauf 74 gezeichnet. Anschließend wird die Antriebsmomentkennlinie 60 bis 64 ausgewählt, die genau durch den Schnittpunkt P1' oder aber zumindest in seiner Nähe verläuft. Da die Antriebsmomentkennlinie 64 durch den Schnittpunkt P1' verläuft, wird deren Stromamplitude Î1' der Drehzahl D1 bzw. dem Zeitpunkt t1' zugeordnet.

Für die Drehzahl D2 wird in analoger Weise ein Schnittpunkt P2' auf dem Drehmomentverlauf 74 ermittelt. Durch den Schnittpunkt P2' verläuft die Antriebsmomentkennlinie 62, so daß der zu dieser Antriebsmomentkennlinie 62 gehörende Stromamplitudenwert Î2' der Drehzahl D2 bzw. dem Zeitpunkt t2' zugeordnet wird. Für die Drehzahl D3 wird auf dem Drehmomentverlauf 74 ein Schnittpunkt P3' ermittelt, durch den die Antriebsmomentkennlinie 60 verläuft, so daß deren Stromamplitudenwert Î3' der Drehzahl D3 bzw. dem Zeitpunkt t3' zugeordnet wird.

Die vertikale Linie bei der Drehzahl D3 schneidet auch den Lastmomentverlauf 70 in einem Schnittpunkt AP, welcher dem Arbeitspunkt des Schrittmotors nach Beenden der Beschleunigung entspricht. Bei der Drehzahl D3 ist die verbleibende Drehmomentreserve in Bezug auf den Lastmomentverlauf 70 sehr klein, so daß ein gewisser Sicherheitsbereich für kleine Schwankungen des Lastmoments MLast für Zeitpunkte tn > t3' gegeben ist.

Das anhand der Figur 2 dargestellte Verfahren zum Bestimmen der Stromamplituden kann auch bei veränderten Rampen 50 verwendet werden, z.B. gemäß einer Funktion, die der Tangens-Hyperbolicus-Funktion ähnelt. Ein solcher Verlauf ist im Teil a der Figur 2 durch eine Rampe 80 dargestellt. Wird der Schrittmotor in einem Drucker zum Antrieb eines Papiertransports eingesetzt, so ergibt sich mit einer Rampe 80 ein Transportsystem, welches das Papier nicht übermäßig belastet. Bei Endlospapier tritt diese Eigenschaft noch mehr in den Vordergrund.

Die ermittelten Stromamplitudenwerte Î1' bis Î3' werden mit den Drehzahlen D1 bis D3 in einem Speicher gespeichert. Beginnend zum Zeitpunkt t0' werden diese Werte durch eine Steuereinheit an eine Ansteuereinheit des Schrittmotors ausgegeben, welche die Wicklungen des Schrittmotors mit Strömen der Stromamplituden Î1' bis Î3' und durch die zugeordneten Drehzahlen D1 bis D3 vorgegebenen Frequenzen bestromt.

Alternativ zum Speicher kann auch eine Ausgabeeinheit verwendet werden, die nur Funktionsausdrücke zum Lastmomentverlauf und/oder zum Drehmomentverlauf speichert. Mit diesen Funktionsausdrücken werden dann in Echtzeit unter Einsatz eines Prozessors die zu bestimmten Zeiten gehörende jeweilige Drehzahl und Stromamplitude berechnet.

**Patentansprüche**

1. Verfahren zum Betreiben eines Schrittmotors in einem Druck- oder Kopiergerät,

   bei dem sich das Lastmoment (M) bei im wesentlichen gleicher Drehzahl (D) zeitlich ändert,

   der zeitliche Verlauf (28) des Lastmoments (M) in einem Einmeßvorgang ermittelt wird,

   abhängig vom Verlauf (28) des Lastmoments (M) ein Verlauf (34) von Amplitudenwerten (Î) für die Wicklungsströme des Schrittmotors ermittelt wird, derart, daß bei sich änderndem Lastmoment (M) die Amplitudenwerte (Î) gleichsinnig geändert werden,

   und bei dem anschließend die Wicklungsströme beginnend zu einem Startzeitpunkt (t1) gemäß dem ermittelten Amplitudenverlauf verändert werden, wobei die Periodendauer der Wicklungsströme konstant ist,

   wobei mit einem Sensor (22) der Transport des Einzelblatts im Drucker erfaßt wird und abhängig vom Sensorsignal der Startzeitpunkt (t1) bestimmt wird.

2. Verfahren nach Anspruch 1, **dadurch gekennzeichnet, daß** der Schrittmotor mindestens eine Fixierwalze (10,12) zum Fixieren des Tonerbildes auf mindestens einem Einzelblatt (18) in einem elektrofotografischen Einzelblattdrucker antreibt, und daß der Startzeitpunkt (t1) etwa durch den Fixierbeginn des Einzelblatts (18) bestimmt wird.

3. Verfahren nach Anspruch 2, **dadurch gekennzeichnet, daß** die Fixierwalze (10,12) in einem Abstand (1) von einer Umdruckstation (14) zum Aufbringen des Tonerbildes angeordnet ist, der kleiner als die Blattlänge (11) des Einzelblatts (18) in Transportrichtung (20) ist.

**4.** Verfahren nach einem der vorhergehenden Ansprüche, **dadurch gekennzeichnet, daß** der zeitliche Verlauf (28) des Lastmoments (M) zu Zeitpunkten bestimmt wird, die durch die Schrittfrequenz des Schrittmotors bei der genannten Drehzahl definiert werden.

**5.** Verfahren nach einem der vorhergehenden Ansprüche, **dadurch gekennzeichnet, daß** die Amplitudenwerte (Î) durch Multiplikation der zugeordneten Lastmomentwerte (M) mit einem vorgegebenen Proportionalitätsfaktor (k) gebildet werden.

**6.** Verfahren nach einem der vorhergehenden Ansprüche, **dadurch gekennzeichnet, daß** die Stromamplitudenwerte (Î) der Stromamplitude im Vollschritt-, Halbschritt- oder Mikroschrittbetrieb des Schrittmotors überlagert werden.

**7.** Schrittmotorsteuerung zum Durchführen des Verfahrens nach einem der vorhergehenden Ansprüche,

mit einer Ansteuereinheit zum Ansteuern der Wicklungen eines Schrittmotors mit Strömen zeitlich veränderlicher Amplitude und konstanter Frequenz,

einer Ausgabeeinheit zum Ausgeben einer Vielzahl von Amplitudenwerten (Î), die sich zu einem vorgegebenen Lastmoment (M) des Schrittmotors ändern,

und mit einer Steuereinheit zum Steuern der Ausgabeeinheit, derart, daß die Amplitudenwerte (Î) an die Ansteuereinheit beginnend zu einem Startzeitpunkt (t1) ausgegeben werden.

**8.** Verfahren zum Betreiben eines Schrittmotors,

bei dem die Wicklungen des Schrittmotors mit Stromimpulsen definierter Stromamplitude angesteuert werden,

die Lastmomentkennlinie (70) über der Drehzahl (D) in einem Einmeßvorgang ermittelt wird,

die Antriebsmomentkennlinien (60 bis 64) des Schrittmotors über der Drehzahl (D) für eine Vielzahl von Stromamplituden (Î1' bis Î3') bestimmt werden,

der zeitliche Verlauf (50) der Drehzahl (D) des Schrittmotors gemäß einer Rampenfunktion vorgegeben wird,

abhängig von einem jeweiligen Drehzahlwert (D1 bis D3) aus den Antriebsmomentkennlinien (60 bis 64) diejenige Stromamplitude (Î1' bis Î3') ausgewählt wird, bei der die Drehmomentreserve aus Antriebsmoment abzüglich Lastmoment (MLast) innerhalb eines vorbestimmten Bereiches liegt,

und bei dem nach dem Ermitteln der Lastmomentkennlinie (70) der Schrittmotor beginnend zu einem Startzeitpunkt (t0') gemäß dem vorgegebenen Drehzahlverlauf (50) mit Stromimpulsen der ausgewählten Stromamplituden (Î1' bis Î3') angesteuert wird, wobei sich die Periodendauer der Wicklungsströme gemäß dem vorgegebenen Drehzahlverlauf (50) ändert.

**9.** Verfahren nach Anspruch 8, **dadurch gekennzeichnet, daß** der Schrittmotor einen Teil des Transportsystems zum Transport von blattförmigem Trägermaterial in einem elektrofotografischen Drucker antreibt.

**10.** Verfahren nach Anspruch 8 oder 9, **dadurch gekennzeichnet, daß** die Stromamplitudenwerte (Î1' bis Î3') die Stromamplituden im einfachen Vollschritt-, Halbschritt- oder Mikroschrittbetrieb des Schrittmotors überlagern.

**11.** Schrittmotorsteuerung zum Durchführen des Verfahrens nach einem der vorhergehenden Ansprüche 9 bis 11,

mit einer Ansteuereinheit zum Ansteuern der Wicklungen eines Schrittmotors mit Strömen zeitlich veränderlicher Amplitude,

einer Ausgabeeinheit zum Ausgeben mindestens eines Verlaufs der Drehzahl des Schrittmotors und zum Ausgeben eines dem Drehzahlverlauf zugeordneten Verlaufs von Stromamplitudenwerten,

und mit einer Steuereinheit zum Steuern der Ausgabeeinheit, derart, daß die Amplitudenwerte an die Ansteuereinheit beginnend zu einem Startzeitpunkt synchron zur Veränderung der Drehzahl gemäß dem Drehzahlverlauf ausgegeben werden, wobei die Drehmomentreserve des Schrittmotors aus Antriebsmoment abzüglich Lastmoment innerhalb eines vorbestimmten Bereichs liegt.

**Claims**

**1.** Method for operating a stepping motor in a printer or copier device,

whereby the load moment (M) changes over time given essentially identical speed (D), the time curve (28) of the load moment (M) is determined in a measuring procedure, a curve (34) of the amplitude values (Î) for the winding currents of the stepping motor is determined dependent on the curve (28) of the load moment (M) such that the amplitude values (Î) are opposite buried given changing load moment (M), and whereby, subsequently, the winding currents beginning at a starting time (t1) are modified according to the identified amplitude curve, whereby the cycle duration of the winding currents is constant, whereby the transport of the single sheet in the printer is acquired with a sensor (22) and the starting time (t1) is determined dependent on the sensor signal.

2. Method according to claim 1, **characterized in that** the stepping motor drives at least one fixing drum (10, 12) for fixing the toner image on at least one single sheet (18) in an electrophotographic single-sheet printer; and **in that** the starting time (t1) is approximately determined by the start of fixing of the single sheet (18).

3. Method according to claim 2, **characterized in that** the fixing drum (10, 12) is arranged at a distance (1) from a transfer printing station (14) for applying the toner image that is smaller then the sheet length (11) of the single sheet (18) in conveying direction (20).

4. Method according to one of the preceding claims, **characterized in that** the time curve (28) of the load moment (M) is determined at points in time that are defined by the step frequency of the stepping motor and said speed.

5. Method according to one of the preceding claims, **characterized in that** the amplitude values (Î) are formed by multiplication of the allocated load moment values (M) by a predetermined proportionality factor (k).

6. Method according to one of the preceding claims, **characterized in that** the current amplitude values (Î) are superimposed on the current amplitude during full-step, half-step or micro-step operation of the stepping motor.

7. Stepping motor control for the implementation of the method according to one of the preceding claims, having a drive unit for driving the windings of a stepping motor with currents having a time-variable amplitude and constant frequency, having an output unit for outputting a plurality of amplitude values (Î) that change at a predetermined load moment (M) of the stepping motor, and having a control unit for controlling the output unit such that the amplitude values (Î) are output to the drive unit beginning at a starting time (t1).

8. Method for operating a stepping motor, whereby the windings of the stepping motor are driven with current pulses having a defined current amplitude;

the load moment characteristic (70) is determined over the speed (D) in a measuring procedure; the drive moment characteristics (60 through 64) of the stepping motor are determined over the speed (D) for a plurality of current amplitude (Î) through (Î3'); the time curve (50) of the speed (D) of the stepping motor is predetermined according to a ramp function; dependent on the respective speed value (D1) through (D3), that current amplitude (Î1' through Î3') at which the torque reserve from drive moment minus load moment (MLoad) lies within a predetermined range is selected from the drive moment characteristic (60 through 64); and whereby, after the determination of the load moment characteristic (70), the stepping motor is driven beginning at a starting time (t0') with current pulses of the selected current amplitudes (Î1' through Î3') according to the predetermined speed curve (50), whereby the cycle duration of the winding currents changes according to the predetermined speed curve (50).

9. Method according to claim 8, **characterized in that** the stepping motor drives a part of the transport system for transporting sheet-shape carrier material in an electrophotographic printer.

10. Method according to claim 8 or 9, **characterized in that** the current amplitude values (Î1' through Î3') superimpose the current amplitudes in simple full-step, half-step or micro-step operation of the stepping motor.

11. Stepping motor control for the implementation of the method according to one of the preceding claims 9 through 11,

having a drive unit for driving the windings of a stepping motor with currents having a time-variable amplitude;

having an output unit for outputting at least one curve of the speed of the stepping motor and for outputting a curve of current amplitude values allocated to the speed curve;

and having a control unit for controlling the output unit such that the amplitude values are output to the drive unit beginning at a starting time synchronously with the variation of the speed according to the speed curve, whereby the torque reserve of the stepping motor from drive moment minus load moment lies within a predetermined range.

## Revendications

1. Procédé pour faire fonctionner un moteur pas-à-pas dans un appareil d'impression ou un copieur, dans lequel

   le couple résistant (M) varie dans le temps pour un nombre de tours (D) sensiblement identique,

   la courbe (28) de variation dans le temps du couple résistant (M) est déterminée dans un processus d'étalonnage,

   à partir de la courbe (28) de variation dans le temps du couple résistant (M) il est déterminé une courbe (34) de variation dans le temps des valeurs d'amplitude (Î) des courants passant dans les enroulements du moteur pas-à-pas de sorte que, lorsque le couple résistant (M) varie, les valeurs d'amplitude (Î) varient dans le même sens,

   et dans lequel enfin les courants passant dans les enroulements varient à partir d'un instant initial (t1) conformément à la courbe déterminée de variation dans le temps de l'amplitude, la période des courants passant dans les enroulements étant de durée constante,

   procédé dans lequel le défilement de la feuille individuelle dans l'appareil d'impression est détecté au moyen d'un capteur (22) et, à partir du signal délivré par le capteur, il est déterminé l'instant initial (t1).

2. Procédé selon la revendication 1, **caractérisé en ce que** le moteur pas-à-pas entraîne au moins un rouleau de fixation (10, 12) pour fixer l'image formée par du toner sur au moins une feuille individuelle (18) dans un appareil d'impression électrographique feuille à feuille,

   et **en ce que** l'instant initial (t1) est déterminé sensiblement par le début de la fixation de la feuille individuelle (18).

3. Procédé selon la revendication 2, **caractérisé en**

**ce que** le rouleau de fixation (10, 12) est agencé à une distance ($1_1$) d'une station de duplication (14) pour déposer l'image formée par du toner, laquelle distance est inférieure à la longueur de feuille ($1_2$) de la feuille individuelle (18) dans le sens de défilement (20).

4. Procédé selon l'une quelconque des revendications précédentes, **caractérisé en ce que** la courbe (28) de variation dans le temps du couple résistant (M) est déterminée par rapport à des instants qui sont définis par la fréquence des pas du moteur pas-à-pas pour ledit nombre de tours.

5. Procédé selon l'une des revendications précédentes, **caractérisé en ce que** les valeurs d'amplitude (Î) sont obtenues en multipliant la valeur du couple résistant (M) associée par un facteur de proportionnalité prédéterminé (k).

6. Procédé selon l'une quelconque des revendications précédentes, **caractérisé en ce que** les valeurs (Î) de l'amplitude du courant sont superposées en fonctionnement à pas total, à demi-pas ou à micro-pas, du moteur pas-à-pas.

7. Dispositif de commande de moteur pas-à-pas pour mettre en oeuvre le procédé selon l'une quelconque des revendications précédentes, comportant

   une unité d'attaque pour attaquer les enroulements d'un moteur pas-à-pas avec des courants d'amplitude variable dans le temps et de fréquence constante,

   une unité de sortie pour délivrer une pluralité de valeurs d'amplitude (Î) qui varient par rapport à un couple résistant prédéterminé (M) du moteur pas à pas,

   et une unité de commande pour commander l'unité de sortie de sorte que les valeurs d'amplitude (Î) sont délivrées à l'unité d'attaque en commençant à un instant initial (t1).

8. Procédé pour faire fonctionner un moteur pas-à-pas, dans lequel

   les enroulements du moteur pas à pas sont attaqués par des impulsions de courant d'amplitude définie,

   la courbe caractéristique (70) du couple résistant en fonction du nombre de tours (D) est déterminée dans un processus d'étalonnage,

   les courbes caractéristiques (60 à 64) du couple d'entraînement du moteur pas-à-pas en fonction du nombre de tours (D) sont déterminées pour une pluralité d'amplitudes de courant (Î1' à Î3'),

   la courbe (50) de variation dans le temps du nombre de tours du moteur pas-à-pas est prédéterminée conformément à une fonction rampe,

à partir d'un nombre de tours correspondant (D1 à D3) donné par les courbes caractéristiques (60 à 64) du couple d'entraînement, il est choisi l'amplitude de courant (Î1' à Î3') pour laquelle la réserve de couple de rotation donnée par le couple d'entraînement moins le couple résistant (MLast) se trouve dans une zone prédéterminée,

et dans lequel, après avoir déterminé la courbe caractéristique (70) du couple résistant, le moteur pas-à-pas est attaqué par des impulsions de courant d'amplitudes choisies (Î1' à Î3') en commençant à un instant initial (t0') conformément à la courbe prédéterminée (50) de variation du nombre de tours, la période des courants passant dans les enroulements variant conformément à la courbe prédéterminée (50) de variation du nombre de tours.

9.  Procédé selon la revendication 8, **caractérisé en ce que** le moteur pas-à-pas entraîne une partie du système de défilement pour faire défiler une matière formant support se présentant sous la forme d'une feuille dans un appareil d'impression électrographique.

10. Procédé selon la revendication 8 ou 9, **caractérisé en ce que** les valeurs des amplitudes de courant (Î1' à Î3') se superposent aux amplitudes de courant en fonctionnement simple à pas complet, à demi-pas ou à micro-pas, du moteur pas-à-pas.

11. Dispositif de commande de moteur pas-à-pas pour mettre en oeuvre le procédé selon l'une des revendications précédentes 9 à 11, comportant

une unité d'attaque pour attaquer les enroulements d'un moteur pas-à-pas avec des courants d'amplitude variable dans le temps,
une unité de sortie pour délivrer au moins une courbe de variation du nombre de tours du moteur pas-à-pas, et pour délivrer une courbe de variation des valeurs d'amplitude de courant associées à la courbe de variation du nombre de tours,
et une unité d'attaque pour attaquer l'unité de sortie de sorte que les valeurs d'amplitude sont délivrées à l'unité d'attaque en commençant à un instant initial de façon synchrone par rapport à la variation du nombre de tours conformément à la courbe de variation du nombre de tours, la réserve de couple de rotation du moteur pas-à-pas donnée par le couple d'entraînement moins le couple résistant se trouvant dans une zone prédéterminée.

l2

l1

12

14

Papierlauf

26

S

20

16

24

E

22

18

10

Verwischung am
Umdruck ⇒ ∅

a)

M

M(t)

M1

Momentenverlauf

28

30

M0

t

t3  t2  t1  t0

32

b)

$\hat{I}$

Δt

gesteuerter Phasenstrom
Level

$\hat{I}1$

36

34

$\hat{I}0$

t

t3  t2  t1  t0

38

c)

$\hat{I}(t) = k * M(t)$

Fig.1

Fig.2